# EUROPÄISCHE PATENTANMELDUNG

(11) **EP 1 081 464 A2**
(43) Veröffentlichungstag der Anmeldung: **07.03.2001**
(21) Anmeldenummer: 00113353.7
(22) Anmeldetag: 23.06.2000
(51) Int. Cl.: G01F 1/684, G01F 1/692

(54) **Vorrichtung zum Messen des Massendurchflusses von Luft**

(30) Priorität: 28.08.1999 DE 19940958
(71) Anmelder: DaimlerChrysler AG, 70567 Stuttgart (DE)
(72) Erfinder: Bender, Franz, 73240 Wendlingen (DE); Nunzer, Herbert, 70599 Stuttgart (DE)

(57) **Zusammenfassung**

Die Erfindung betrifft eine Vorrichtung zur Messung der Masse eines strömenden Mediums, insbesondere der Ansaugluft einer Brennkraftmaschine, die in eine Strömungsleitung ragt und zur Messung der in der Strömungsleitung strömenden Masse ein vom strömenden Medium angeströmtes, temperaturempfindliches Meßelement aufweist.

Die Erfindung sieht vor, daß die Flächennormale (F) mindestens einer dem strömenden Medium ausgesetzten Meßfläche (18) des Meßelements (16) eine in Schwerkraftrichtung (g) weisende Komponente besitzt.

## Beschreibung

### Stand der Technik

Die Erfindung geht aus von einer Vorrichtung zur Messung der Masse eines strömenden Mediums gemäß dem Oberbegriff des Anspruchs 1.

Eine solche Vorrichtung ist aus der DE 196 43 996 A1 bekannt, welche zur Messung der Ansaugluftmasse einer Brennkraftmaschine dient. Die Vorrichtung ragt in eine Ansaugleitung der Brennkraftmaschine und beinhaltet zur Messung der Masse der in der Ansaugleitung strömenden Ansaugluft ein von dieser angeströmtes, temperaturempfindliches Meßelement. Das Meßelement ist auf einem Träger angebracht und hat eine der Ansaugluft ausgesetzte, freie Meßfläche.

Bei dem Meßelement kann es sich beispielsweise um einen Hitzdraht-Luftmassen-Durchflußmesser oder um einen Heißfilm-Luftmassen-Durchflußmesser handeln. Im ersten Fall wird der Ansaugluftstrom an einem beheizten Draht vorbeigeleitet, welcher Teil einer elektrischen Brückenschaltung ist und welcher durch den ihn durchfließenden Strom auf konstanter Übertemperatur zur Ansaugluft gehalten wird. Durch dieses Prinzip ist der benötigte Heizstrom ein Maß für die vom Motor angesaugte Luftmasse. Der Heißfilm-Luftmassen-Durchflußmesser arbeitet nach demselben Prinzip wie der Hitzdraht-Luftmassen-Durchflußmesser. Wesentliche Teile der elektrischen Brückenschaltung sind als dünne, Filmwiderstände enthaltende Filmschicht auf einem Keramik-Substrat zusammengefaßt.

Beide Arten von Luftmassen-Durchflußmessern reagieren sehr empfindlich gegenüber Verschmutzung der Widerstandsschicht, weil Ablagerungen, insbesondere wenn sie feucht sind, Parallelwiderstände bilden, die das Meßergebnis beeinflussen. Solche Verschmutzungen können von Partikeln herrühren, z.B. von Streusalzkristallen, welche zusammen mit der Ansaugluft angesaugt werden. Derartige Partikel setzen sich in dem vorgeschalteten Luftfilter ab und können während der Stillstandsphase der Brennkraftmaschine im Luftfilter auskristallisieren. Beim anschließenden Start der Brennkraftmaschine werden diese vom Luftfilter als feste Partikel wieder ausgestoßen und gelangen so ungefiltert in den Ansaugluftstrom. Da die Salzkristalle mit hoher Geschwindigkeit im Ansaugluftstrom mitgeführt werden, können sie zudem die dem Ansaugluftstrom ausgesetzte, empfindliche Widerstandsschicht der Meßelemente beschädigen. Solche Beschädigungen bzw. Ablagerungen auf der Widerstandsschicht des Meßelements führen zu einer unerwünschten Verschiebung der Kennlinie (Drift).

Bei der bekannten Vorrichtung zur Messung der Masse der Ansaugluft ist das Meßelement vertikal angeordnet, d.h. die Flächennormale der Meßfläche des Meßelements ist senkrecht zur Schwerkraftrichtung, so daß in der Ansaugluft schwebende, dem Einfluß der Schwerkraft unterworfene Partikel sich tangential an der Meßfläche anlagern können.

Der vorliegenden Erfindung liegt demgegenüber die Aufgabe zugrunde, eine Vorrichtung zur Messung der Masse eines strömenden Mediums der eingangs erwähnten Art zu schaffen, bei welcher die Neigung der Meßfläche des Meßelements zur Verschmutzung wesentlich reduziert wird.

Erfindungsgemäß wird diese Aufgabe durch die im kennzeichnenden Teil von Anspruch 1 genannten Merkmale gelöst.

### Vorteile der Erfindung

Da erfindungsgemäß die Flächennormale der Meßfläche eine Komponente in Schwerkraftrichtung aufweist, ist immer sichergestellt, daß die Meßfläche zur Schwerkraftrichtung hin geneigt ist bzw. senkrecht zu ihr steht. Weil im strömenden Medium mitgeführte Schmutzpartikel aufgrund der Schwerkraftwirkung von der Meßfläche weg transportiert werden, sinkt die Wahrscheinlichkeit, daß sie sich an ihr ansetzen können. Innerhalb des Winkelbereichs, der durch die beiden Extremlagen festgelegt ist, in welchen die Meßfläche beinahe parallel zur Schwerkraftrichtung steht, sind beliebige Winkellagen möglich. Berücksichtigt man, daß der Kopf des Meßelementträgers teilweise aus der Strömungsleitung herausragt und hiervon elektrische Leitungen zur externen Stromversorgung wegführen, dann kann im Falle beengter Raumverhältnisse, wie sie z.B. im Motorraum von Kraftfahrzeugen vorliegen können, eine an die gerade vorhandenen räumlichen Gegebenheiten angepaßte Einbauwinkellage des Meßelements gewählt werden.

Durch die in den Unteransprüchen aufgeführten Maßnahmen sind vorteilhafte Weiterbildungen und Verbesserungen der im Patentanspruch 1 angegebenen Vorrichtung möglich.

Eine besonders zu bevorzugende Weiterbildung der Erfindung sieht vor, daß die Flächennormale der Meßfläche des Meßelements vorzugsweise parallel zur Schwerkraftrichtung und die Meßfläche des Meßelements parallel zur vorzugsweise horizontalen Strömungsrichtung des strömenden Mediums angeordnet ist, In diesem Fall ergibt sich eine horizontale Lage des Meßelements, wobei die Meßfläche nach unten weist, so daß auf ihr keine Ablagerungen stattfinden. Wegen der Parallelausrichtung der Meßfläche zur Strömungsrichtung ist sie zudem nicht einer direkten Anströmung ausgesetzt, weshalb die Wahrscheinlichkeit von Beschädigungen aufgrund mitströmender Partikel sinkt.

### Zeichnungen

Ausführungsbeispiele der Erfindung sind in den Zeichnungen dargestellt und in der nachfolgenden Beschreibung näher erläutert. Es zeigen :
- Fig.1: eine schematische Ansicht auf eine bevorzugte Ausführungsform der Vorrichtung gemäß der Erfindung entlang der Mittelachse einer Strömungsleitung;
- Fig.2: einen vergrößerten Ausschnitt von Fig.1, wobei die Flächennormale einer Meßfläche eines Meßelements parallel zur Schwerkraftrichtung ist;
- Fig.3: eine Schnittdarstellung entlang der Linie III-III von Fig.1;
- Fig.4: einen vergrößerten Ausschnitt einer weiteren Ausführungsform, bei welcher die Flächennormale der Meßfläche des Meßelements winklig zur Schwerkraftrichtung ist.

### Beschreibung der Ausführungsbeispiele

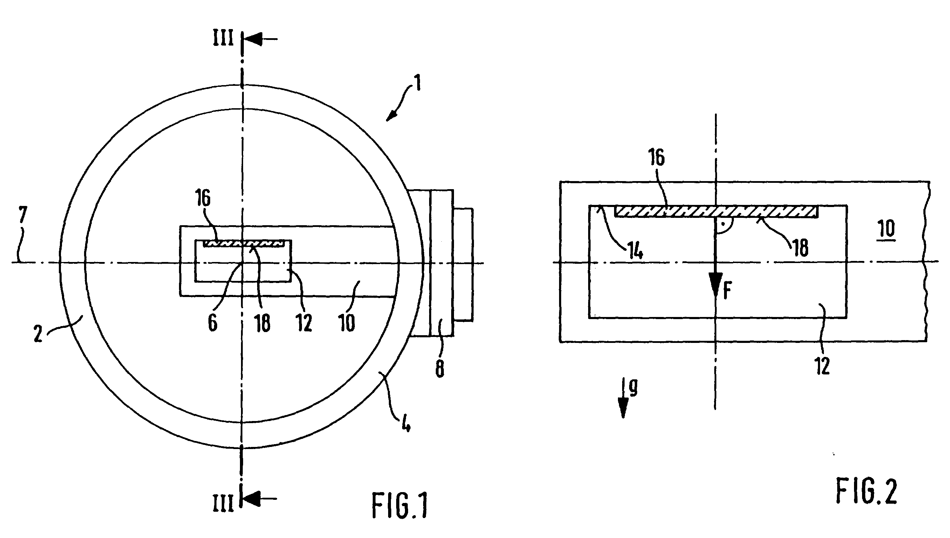

Die in Fig.1 insgesamt mit 1 bezeichnete Vorrichtung zur Messung der Masse eines strömenden Mediums dient gemäß einer bevorzugten Ausführungsform der Erfindung zur Messung der Ansaugluftmasse einer Brennkraftmaschine. Bei der Brennkraftmaschine kann es sich um eine gemischverdichtende, fremdgezündete oder um eine luftverdichtende, selbstzündende handeln. Die Vorrichtung 1 ist in einem Meßrohr 2 des Ansaugsystems der Brennkraftmaschine untergebracht, stabförmig ausgebildet und in einer Öffnung einer Wandung 4 des Meßrohres 2 beispielsweise steckbar aufgenommen. Das Meßrohr 2 steht mit einer Ansaugleitung der Brennkraftmaschine in Verbindung und wird insofern auch von Ansaugluft durchströmt. In der bevorzugten Ausführungsform befinden sich die Mittelachse 6 des Meßrohres 2 und die stabförmige Vorrichtung 1 in einer Horizontalebene 7, wobei die Vorrichtung 1 quer zur Mittelachse 6 des Meßrohres 2 angeordnet ist.

Die Vorrichtung 1 beinhaltet einen Trägerkopf 8, dessen Durchmesser größer ist als der der Öffnung der Meßrohrwandung 4, und einen in das Meßrohr 2 hineinragenden Trägerfuß 10, an dessen freiem Ende ein rechteckförmiger, in Richtung der Mittelachse 6 des Meßrohres 2 verlaufender Durchbruch 12 ausgebildet ist. Die vier flächigen Innenwände des Durchbruchs 12 sind parallel zur Mittelachse 6 des Meßrohres 2. Eine obere, zur Horizontalebene 7 parallele Innenwand 14 des Durchbruchs 12 trägt ein Meßelement 16, beispielsweise in Gestalt eines Heißfilm-Luftmassen-Durchflußmessers, an dessen von der oberen Innenwand 14 wegweisender Seite eine Meßfläche 18 vorgesehen ist, beispielsweise in Form einer dünnen Filmwiderstände enthaltenden Filmschicht, wie anhand Fig.2 gezeigt ist. Da der Durchbruch 12 von Ansaugluft durchströmt ist, ist die Meßfläche 18 der Ansaugluft ausgesetzt und erzeugt zusammen mit einer nicht dargestellten Schaltung elektrische Signale, welche ein Maß für die Masse der durch das Meßrohr 2 strömenden Ansaugluft darstellen. Funktion und Wirkungsweise eines solchen Heißfilm-Luftmassen-Durchflußmessers 16 sind hinreichend bekannt, daher sollen hierzu keine weiteren Ausführungen erfolgen. Möglich ist aber auch, das Meßelement 16 mit einem Sensorbereich 18 bzw. die Meßfläche 18 in Form eines sogenannten mikromechanischen Bauteils auszubilden, das einen Trägerkörper mit einem durch Ausätzen entstandenen membranförmigen Sensorbereich mit einer äußerst geringen Dicke und mehrere, ebenfalls durch Ausätzen entstandene Widerstandsschichten, die wenigstens einen temperaturabhängigen Meßwiderstand und beispielsweise einen Heizwiderstand bilden, aufweist.

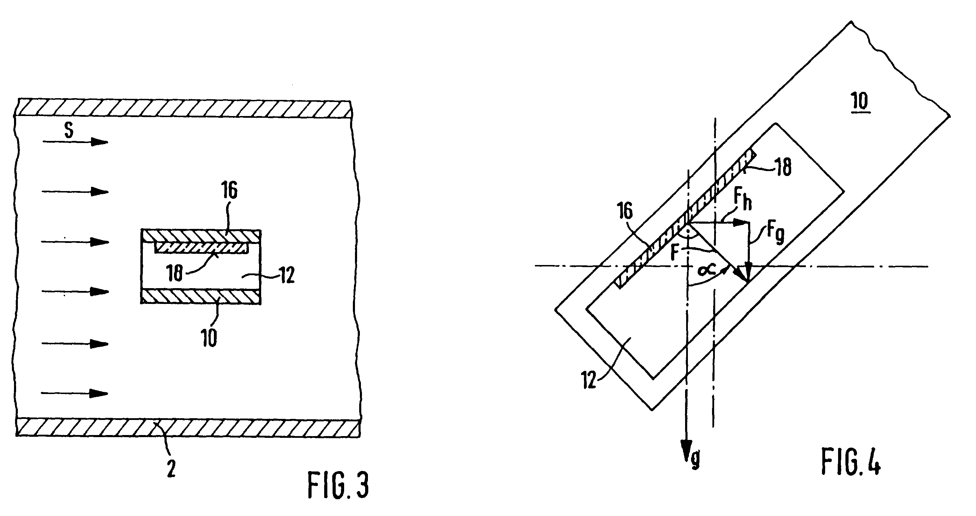

Die Flächennormale F der Meßfläche 18 ist vorzugsweise parallel zur Richtung der Schwerkraft g, wobei diese Richtung in Fig.2 und Fig.4 durch einen Pfeil gekennzeichnet ist. Zusätzlich ist die Meßfläche 18 parallel zur horizontalen Strömung der Ansaugluft, welche in Fig.3 durch Pfeile S bezeichnet ist. Aufgrund der nach unten weisenden Meßfläche 18 können sich im Ansaugluftstrom S befindliche, unter dem Einfluß der Schwerkraft nach unten absinkende Partikel nicht auf der Meßfläche 18 absetzen. Wie entsprechende Versuche des Anmelders gezeigt haben, wird durch diese Maßnahme die Neigung der Meßfläche 18 zur Verschmutzung drastisch reduziert. Als Folge wird eine verschmutzungsbedingte Kennlinienverschiebung (Drift), wie sie bei derartigen Meßvorrichtungen auftreten kann, vermieden.

Anstatt die Meßfläche 18 so auszurichten, daß ihre Flächennormale F exakt parallel zur Richtung der Schwerkraft g ist, kann die Flächennormale F gemäß einer weiteren, in Fig.4 dargestellten Ausführungsform auch in einem Winkel α schräg zu dieser verlaufen. Im Ausführungsbeispiel von Fig.4 beträgt der Winkel α zwischen der Flächennormalen F und der Richtung der Schwerkraft g beispielsweise 45 Grad, wodurch sich die Flächennormale F in zwei Komponenten F_{g} und Fₕ zerlegen läßt. Die Komponente Fₕ ist senkrecht zur Richtung der Schwerkraft g und die Komponente F_{g} weist in Richtung der Schwerkraft g. Solange die in Richtung der Schwerkraft g weisende Komponente F_{g} der Flächennormalen F ungleich Null ist, ist die Meßfläche 18 immer in einem gewissen Maß zur Schwerkraftrichtung g hin geneigt. Dann ist die Tendenz, daß sich an ihr Partikel ablagern geringer als wenn die Meßfläche 18 etwa exakt vertikal ausgerichtet wäre oder im ungünstigsten Fall nach oben weisen würde und sich dann aufgrund der Schwerkrafteinflusses nach unten bewegende Partikel auf ihr ansammeln. Vorzugsweise liegt dann der zwischen der Flächennormalen E der Meßfläche 18 und der Richtung der Schwerkraft g gebildete Winkel α in einem Bereich von ― 45 Grad bis + 45 Grad, wobei das Vorzeichen davon abhängt, ob die Flächennormale F der Meßfläche 18 bezüglich der Schwerkraftrichtung g nach links oder nach rechts geneigt ist.

Alternativ könnte die Meßfläche 18 noch stärker geneigt sein solange erfüllt ist, daß die in Richtung der Schwerkraft g weisende Komponente F_{g} der Flächennormalen F ungleich Null ist. Im Extremfall ist die Meßfläche 18 dann annähernd vertikal ausgerichtet, mit geringer Neigung nach rechts oder links, ohne aber diesen Grenzzustand zu erreichen.

Für den Fall, daß die Meßfläche 18 nicht parallel zur Strömung S verläuft, weil z.B. die Strömungsrichtung nicht horizontal ist, sollte die Meßfläche 18 von der Strömung S weg weisen, um Beschädigungen durch anprallende Partikel zu vermeiden. Dann gilt die Bedingung, daß die Flächennormale F der Meßfläche 18 eine in Strömungsrichtung S weisende Komponente besitzen muß.

Die Erfindung ist nicht auf eine Anwendung in Strömungsleitungen von Brennkraftmaschinen noch auf die genannten Meßelemente beschränkt, vielmehr ist sie für jegliche Arten temperaturempfindlicher Meßelemente, Strömungsmedien und Strömungsleitungen vorteilhaft einsetzbar.

## Patentansprüche

1. Vorrichtung (1) zur Messung der Masse eines strömenden Mediums, insbesondere der Ansaugluft einer Brennkraftmaschine, die in eine Strömungsleitung (2) ragt und zur Messung der in der Strömungsleitung (2) strömenden Masse ein vom strömenden Medium angeströmtes Meßelement (16) aufweist, **dadurch gekennzeichnet**, daß die Flächennormale (F) mindestens einer dem strömenden Medium ausgesetzten Meßfläche (18) des Meßelements (16) eine in Schwerkraftrichtung (g) weisende Komponente (F_{g}) besitzt.

2. Vorrichtung nach Anspruch 1, **dadurch gekennzeichnet**, daß der Winkel α zwischen der Flächennormalen (F) der Meßfläche (18) und der Schwerkraftrichtung (g) vorzugsweise in einem Winkelbereich zwischen + 45 und - 45 Grad liegt.

3. Vorrichtung nach Anspruch 2, **dadurch gekennzeichnet**, daß die Flächennormale (F) der Meßfläche (18) vorzugsweise parallel zur Schwerkraftrichtung (g) ist.

4. Vorrichtung nach Anspruch 3, **dadurch gekennzeichnet**, daß die Meßfläche (18) des Meßelements (16) parallel zu einer vorzugsweise horizontalen Strömung (S) des strömenden Mediums angeordnet ist.

5. Vorrichtung nach einem der Ansprüche 1 bis 3, **dadurch gekennzeichnet**, daß die Flächennormale (F) der Meßfläche (18) eine in Strömungsrichtung (S) weisende Komponente besitzt.

6. Vorrichtung nach einem der vorhergehenden Ansprüche, **dadurch gekennzeichnet**, daß das Meßelement (16) vorzugsweise ein Heißfilm-Luftmassen-Durchflußmesser ist und die Meßfläche (18) eine auf einem Träger (10) aufgebrachte, Filmwiderstände enthaltende Filmschicht ist.

7. Vorrichtung nach einem der vorhergehenden Ansprüche, **dadurch gekennzeichnet**, daß das Meßelement (16) in Form eines mikromechanischen Bauteils ausgebildet ist und einen membranförmigen Sensorbereich (18) geringer Dicke aufweist.

8. Ansaugsystem einer Brennkraftmaschine enthaltend eine Vorrichtung zur Messung der Masse der Ansaugluft nach einem der Ansprüche 1 bis 7.
